# EUROPEAN PATENT SPECIFICATION

(11) **EP 1 519 996 B1**
(45) Date of publication and mention of the grant of the patent: **11.02.2009**
(21) Application number: 03761140.7
(22) Date of filing: 19.06.2003
(51) Int. Cl.: C09D 183/04, C08L 83/04, D06M 15/643

(54) **FIRE AND STAIN RESISTANT COMPOSITIONS**
FEUERFESTE UND SCHMUTZABWEISENDE ZUSAMMENSETZUNGEN
COMPOSITIONS IGNIFUGES RESISTANTES AUX TACHES

(30) Priority: 19.06.2002 US 390073 P
(43) Date of publication of application: 06.04.2005
(73) Proprietor: Dow Corning Corporation, Midland, MI 48686-0994 (US)
(72) Inventor: BLACKWOOD, William, Midland, MI 48642 (US); FEY, Kenneth, Midland, MI 48640 (US); SCHMIDT, Randall, Midland, MI 48642 (US); STARK-KASLEY, Lori, Midland, MI 48642 (US)
(74) Representative: Gillard, Richard Edward
(86) International application number: PCT/US2003/019372
(87) International publication number: WO 2004/000959

(56) References cited:
- EP-A- 1 085 066
- GB-A- 834 376
- US-A- 4 399 247
- US-A- 4 404 348
- PATENT ABSTRACTS OF JAPAN vol. 1996, no. 03, 29 March 1996 (1996-03-29) & JP 07 305053 A (TOSHIBA SILICONE CO LTD), 21 November 1995 (1995-11-21)
- PATENT ABSTRACTS OF JAPAN vol. 018, no. 578 (C-1269), 7 November 1994 (1994-11-07) & JP 06 212114 A (UBE IND LTD), 2 August 1994 (1994-08-02) & DATABASE WPI Derwent Publications Ltd., London, GB; AN 1994-283503
- PATENT ABSTRACTS OF JAPAN vol. 2000, no. 10, 17 November 2000 (2000-11-17) & JP 2000 186279 A (SHIN ETSU CHEM CO LTD;KONISHI CO LTD), 4 July 2000 (2000-07-04) & DATABASE WPI Derwent Publications Ltd., London, GB; AN 2000-567699

## Description

The present invention relates to a composition comprising (A) 100 parts by weight of at least one organosiloxane copolymer; (B) 10 to 120 parts by weight of at least one polyorganosiloxane; and (C) 10 to 150 parts by weight of at least one metal alkoxide. Methods for preparing the above-described composition and for treating substrates are also disclosed.

Compositions for making textiles water repellent have been prepared from many types of organic and silicone components. Compositions using silicone resins containing significant amounts of Q units and various combinations of M, D, and T units have been utilized, however, these types of silicone resins do not provide water repellent compositions having optimum properties, particularly flame retardancy. In addition these Q-containing silicone resins were found to impart stiffness to treated fabric. It has now been found that water repellent compositions comprising silicone resins containing little or no Q units have improved properties including providing flame retardancy and less stiffness to treated fabrics. Another object of the invention is to provide a water repellent composition having improved shelf life.

The present invention relates to a composition comprising (A) 100 parts by weight of at least one organosiloxane copolymer; (B) 10 to 120 parts by weight of at least one polyorganosiloxane; and (C) 10 to 150 parts by weight of at least one metal alkoxide. Methods for preparing the above-described composition and for treating substrates are also disclosed.

One embodiment of the present invention is a composition comprising (A) 100 parts by weight of at least one organosiloxane copolymer having a general formula (I) R¹ₙSiO_{(4-n)/2}, where each R¹ is independently chosen from a hydrogen atom or a monovalent hydrocarbon group comprising 1 to 10 carbon atoms, provided greater than 80 mole percent of R¹ are methyl groups, n is a value from 0.8 to 1.5, greater than 50 mole percent of the copolymer comprises R¹ SiO_{3/2} units, and having a hydroxyl content from 0.2 to 5 weight percent; (B) 10 to 120 parts by weight of at least one polyorganosiloxane having a general formula (II) R²R³₂SiO(R³₂SiO_{2/2})ₐ(R³SiO_{3/2})_{b}SiR³₂R² where each R² is an independently chosen hydrogen atom, monovalent hydrocarbon group comprising 1 to 10 carbon atoms, hydroxy group, or alkoxy group, each R³ is independently chosen from a hydrogen atom or a monovalent hydrocarbon group comprising 1 to 10 carbon atoms, a is an integer from 2 to 2000, and b is chosen such that b/(a+b) is from 0 to 0.05; and (C) 10 to 150 parts by weight of at least one metal alkoxide.

Component (A) comprises 100 parts by weight of at least one organosiloxane copolymer having a general formula (I) R¹ₙSiO_{(4-n)/2}, where each R¹ is independently chosen from a hydrogen atom or a monovalent hydrocarbon group comprising 1 to 10 carbon atoms, provided greater than 80 mole percent of R¹ are methyl groups, n is a value from 0.8 to 1.5 (see comments on n above), provided greater than 50 mole percent of the copolymer comprises R¹ SiO_{3/2} units, and having a hydroxyl content from 0.2 to 5 weight percent.

Component (A) comprises at least one organosiloxane copolymer having a general formula (I) R¹ₙSiO_{(4-n)/2}. As used herein, the term "copolymer" means a polymer comprising at least two different organosiloxane units described by R¹₃ SiO_{1/2} (M units), R¹₂SiO_{2/2} (D units), R¹SiO_{3/2} (T units), and SiO_{4/2} (Q units). Component (A) may be a single organosiloxane copolymer species or a mixture of different organosiloxane copolymers.

Each R¹ of general formula (I) is independently chosen from a hydrogen atom or a monovalent hydrocarbon group comprising 1 to 10 carbon atoms, provided greater than 80 mole percent of R¹ are methyl groups. The monovalent hydrocarbon group represented by R¹ may be substituted with halogen atoms or unsubstituted. Examples of monovalent hydrocarbon group represented by R¹ include alkyl groups such as methyl, ethyl, propyl, isopropyl, butyl, isobutyl, hexyl, 3,3,3-trifluoropropyl, chloromethyl, and octyl; alkenyl groups such as vinyl, allyl, and butadienyl; cycloalkyl groups such as cyclobutyl, cyclopentyl, and cyclohexyl; cycloalkenyl groups such as cyclopentenyl and cyclohexenyl; aryl groups such as phenyl and xylyl; aralkyl groups such as benzyl; and alkaryl groups such as tolyl and styryl. Alternatively, each R¹ is independently chosen from alkyl groups comprising 1 to about 8 carbon atoms. Alternatively, each R¹ is a methyl group.

Subscript n of the organosiloxane copolymer of component (A) allows for various mixtures of the M, D, T, and Q units provided the overall mixture of units would fall in the specified range. Generally, n is a value from 0.8 to 1.5, provided greater than 50 mole percent of the organosiloxane copolymer comprises R¹ SiO_{3/2} units. Alternatively, n is a value from 1 to 1.5. Alternatively, n is a value from 1 to 1.3 and greater than 70 mole percent of the organosiloxane copolymer comprises R¹ SiO_{3/2} units. Alternatively, n is a value from 1 to 1.3, greater than 70 mole percent of the organosiloxane copolymer comprises R¹ SiO_{3/2} units, and the organosiloxane copolymer comprises essentially no SiO_{4/2} units.

The organosiloxane copolymer of component (A) can have a hydroxyl content from 0.2 to 5 weight percent. Alternatively, the hydroxyl content of the organosiloxane copolymer is from 0.3 to 3 weight percent. In addition to hydroxyl groups, the organosiloxane copolymer may contain up to 5 weight percent of alkoxy groups.

The organosiloxane copolymers useful in this invention may be prepared by methods well known in the art. The copolymerization of these units is generally accomplished by hydrolysis and subsequently the condensation of either chlorosilanes or alkoxysilanes. For example, organosiloxane copolymers may be prepared by the hydrolysis and condensation of appropriate amounts of R¹SiCl₃, R¹₂SiCl₂, R¹₃SiCl, and SiCl₄ where R¹ is as described above. A review of this process can be found in "The Chemistry and Technology of Silicones," pp. 192-198, by W. Noll (1968). When using chlorosilanes as a starting material HCI is generated as a by-product and must be neutralized or otherwise removed. One can neutralize HCl using an aqueous solution of base, such as a bicarbonate or carbonate salt of a metal such as sodium or potassium or calcium, or by repeated washing with water. Both methods may also be employed together. When made from alkoxysilanes, residual alcohol can be distilled overhead. Those skilled in the art will recognize that catalysts such as minerals, acids, and bases can be used to facilitate the hydrolysis/condensation process. A neutral solvent such as toluene may also be used to facilitate the reaction. A solvent may also be used when various reactive capping agents are used to reduce residual silanols in the organosiloxane copolymer. The solvent may then be removed by known methods such as distillation after the organosiloxane copolymer's manufacture is complete.

Component (B) comprises at least one polyorganosiloxane having a general formula (II) R²R³₂SiO(R³₂SiO_{2/2})ₐ(R³SiO_{3/2})_{b}SiR³₂R² where each R² is an independently chosen hydrogen atom, monovalent hydrocarbon group comprising 1 to 10 carbon atoms, hydroxy group, or alkoxy group, each R³ is independently chosen from a hydrogen atom and a monovalent hydrocarbon group comprising 1 to 10 carbon atoms, a is an integer from 2 to 2000, and b is chosen such that b/(a+b) is from 0 to 0.05.

Component (B) comprises at least one polyorganosiloxane having a general formula (II) R²R³₂SiO(R³₂SiO_{2/2})ₐ(R³SiO_{3/2})_{b}SiR³₂R². The polyorganosiloxanes may be homopolymers or copolymers (as defined above). The polyorganosiloxanes may be a single species or a mixture of different polymers.

Each R² group of component (B) is an independently chosen hydrogen atom, monovalent hydrocarbon group comprising 1 to 10 carbon atoms, hydroxy group, or alkoxy group. The monovalent hydrocarbon group represented by R² may be substituted with halogen atoms or unsubstituted. Examples of monovalent hydrocarbon groups represented by R² are as described above for the monovalent hydrocarbon groups of R¹.

The alkoxy group represented by R² may be described by -OR⁵ where R⁵ is an alkyl group comprising 1 to 5 carbon atoms. The alkyl group represented by R⁵ may be substituted with halogen atoms or unsubstituted. Examples of alkyl groups include methyl, ethyl, propyl, iso-propyl, n-butyl, iso-butyl, and chloropropyl. Examples of useful alkoxy groups include methoxy, ethoxy, propoxy, iso-propoxy, n-butoxy, and iso-butoxy. Alternatively, each R² of component (B) is an independently chosen alkyl group comprising 1 to 8 carbon atoms. Alternatively, each R² is methyl.

Each R³ group of component (B) is independently chosen from a hydrogen atom or a monovalent hydrocarbon group comprising 1 to 10 carbon atoms. The monovalent hydrocarbon group represented by R³ may be substituted with halogen atoms or unsubstituted. Examples of monovalent hydrocarbon groups represented by R³ are as described above for the monovalent hydrocarbon groups of R¹. Alternatively, each R³ is an independently selected alkyl group comprising 1 to 8 carbon atoms. Alternatively, each R³ is methyl.

The polyorganosiloxanes of component (B) comprise repeating siloxy units described by (R³₂SiO_{2/2})ₐ and (R³SiO_{3/2})_{b}, where R³ is as described above, a is an integer from 2 to 2000, alternatively, from 3 to 300, and b is chosen such that b/(a+b) is from 0 to 0.05. Generally, the viscosity of the polyorganosiloxane of component (B) is from 1 to 250,000 mPa.s as measured at 25° C. Alternatively, the viscosity of the polyorganosiloxane of component (B) is from 10 to 1000 mPa.s as measured at 25° C.

Generally, the present composition comprises 10 to 120 parts by weight of component (B) per 100 parts by weight of component (A). Alternatively, the present composition comprises 50 to 110 parts of component (B) on the same basis. The polyorganosiloxanes of Component (B) are commercially available or may be made by methods known in the art.

Component (C) comprises at least one metal alkoxide. As used herein, the term "metal alkoxide" includes non-hydrolyzed metal alkoxides, partially hydrolyzed metal alkoxides and mixtures thereof. The metal alkoxide may be a single species or a mixture of different metal alkoxides. Particularly useful metal alkoxides are substantially soluble in aliphatic hydrocarbon solvents

Alternatively, metal alkoxides useful in the present composition have the formula M(OR⁴)₄, where M is titanium or zirconium and each R⁴ is independently chosen from alkyl groups comprising 1 to 12 carbon atoms or hydroxylated alkyl groups comprising 1 to 12 carbon atoms and containing less than 4 hydroxyl groups.

Each R⁴ is independently chosen from alkyl groups comprising 1 to 12 carbon atoms or hydroxylated alkyl groups comprising 1 to 12 carbon atoms and containing less than 4 hydroxyl groups. The alkyl groups represented by R⁴ may be substituted with halogen atoms or unsubstituted. Examples of the alkyl groups comprising 1 to 12 carbon atoms of R⁴ include methyl, ethyl, propyl, iso-propyl, n-butyl, and iso-butyl, hexyl, 2-ethylhexyl, octyl, decyl, and dodecyl. Examples of useful titanium alkoxides include tetramethyl titanate, tetraethyl titanate, tetrapropyl titanate, tetraisopropyl titanate, tetrabutyl titanate, tetradecyl titanate, tetraoctyl titanate, tetra 2-ethylhexyl titanate, and tetradodecyl titanate. Examples of useful zirconium alkoxides include tetramethyl zirconate, tetraethyl zirconate, tetrapropyl zirconate, tetraisopropyl zirconate, tetrabutyl zirconate, tetradecyl zirconate, tetraoctyl zirconate, tetra 2-ethylhexyl zirconate, and tetradodecyl zirconate. Alternatively, component (C) metal alkoxides useful in the present composition have the formula M(OR⁴)₄, where M is titanium and each R⁴ is an alkyl group comprising 6 to 12 carbon atoms.

Generally, the present composition comprises 10 to 150 parts by weight of component (C) per 100 parts by weight of component (A). Alternatively, the present composition comprises 50 to 140 parts of component (C) on the same basis. It is also preferable that the amount of Component C in the composition be equal to or greater than the amount of Component B; that is, that the ratio of Component C to Component B is greater or equal to 1.0. Component (C) is commercially available or may be made by methods known in the art.

In an alternative embodiment the present composition may further comprise (D) at least one carrier chosen from water, organic solvents, and silicone compounds.

Suitable organic solvents include hydrocarbons such as aromatic hydrocarbons exemplified by toluene, benzene, and xylene; aliphatic hydrocarbons such as hexane, heptane, naphtha, and mineral spirits; ketones such as acetone, methyl ethyl ketone, and methylisobutyl ketone; and alcohols such as butanol, hexanaol, or octanol. Suitable silicone compounds include dimethylcyclosiloxanes having a DP of 3 to 8. Solvents that are preferred are ketones, aromatic hydrocarbons and aliphatic hydrocarbons. Most preferable are aliphatic hydrocarbons, which are odorless.

The present composition may contain up to 400 parts by weight of component (D) per 100 parts by weight of component (A). Alternatively, the present composition comprises 10 to 400 parts by weight of component (D) on the same basis. Alternatively, the present composition comprises 40 to 200 parts by weight of component (D) on the same basis.

Other additional ingredients may also be added to the present composition provided that the properties of the composition are not significantly reduced. Examples of such ingredients include fillers such as silica and titanium dioxide, silicone or organic-based waxes, fluorocarbons, and stainblockers.

One of the uses of the present composition is treating different substrates. The present composition can have any suitable form to enable treatment of various substrates. For example, the composition can be applied to the substrate neat. However, the composition can also be a solution, dispersion, or emulsion.

This invention further relates to a method for preparing a composition comprising mixing components (A), (B), (C) and any optional ingredients. Components (A), (B), (C) are as described above.

The order of addition of these ingredients is not critical. Alternatively, to facilitate ease of handling, Component (A) may be first mixed with an organic solvent (component (D)) and then mixed with component (B). Component (C) is then added to the mixture of components (A), (B), and optionally (D). The composition may be prepared as a one-part or have multiple parts if desired.

The mixing of ingredients can be done using any equipment known in the art. The temperature that the reaction is run is also not critical. Alternatively, to expedite mixing, one can perform the reaction at temperatures up to 60° C.

This invention further relates to a method for treating substrates and the treated substrates. The method comprises applying a composition comprising components (A), (B), (C) and any optional ingredients to a substrate. Alternatively, the method comprises applying a composition comprising components (A), (B), (C), and (D) to a substrate. Alternatively, the method comprises applying a composition comprising components (A), (B), (C), and (D) to a substrate and then removing component (D) after applying the composition to the substrate. Application of the composition to a substrate can be done in any known fashion, including spraying and dipping.

Many different kinds of substrates can be treated with the present composition. These treated substrates exhibit various improved properties including mildew resistance, stain repellency, water repellency and fire resistance. Examples of useful substrates include leather, wood, textile fabrics, fibers, and masonry. Alternatively, the useful substrates include textile fabrics and fibers.

The fibers that can be treated with the present composition are not specifically restricted. Suitable fibers include natural fibers such as cotton, silk, linen, and wool; regenerated fibers such as rayon and acetate; synthetic fibers such as polyesters, polyamides, polyacrylonitriles, polyethylenes, nylon, and polypropylenes; and combinations and blends thereof.

The form of the fibers is also not specifically restricted. The present treatment method is suitable for threads, filaments, tows, yarns, woven fabrics, knitted materials, nonwoven materials, and others.

Examples of applications include carpet protection, fabric protection in automotive and home furnishings, breathable water repellency for woven and nonwoven substrates and stain resistance in masonry. Benefits also include colorfastness on silk and durable stain and water repellency on silk substrates. Carpet protection requires that the carpet have mildew resistance, water repellency and stain resistance and can pass the flammability test.

The following examples are disclosed to further teach, but not limit, the invention, which is properly delineated by the appended claims.

NMR: The nuclear magnetic resonance (NMR) analysis was done using a Mercury 400 MHz super conducting spectrometer. The instrument uses a silicon-free probe. Characterization of these materials was done using ²⁹Si and ¹³C experiments. Samples were prepared using a 60/40 ratio of deuterated chloroform (CDCl₃) to sample material. The NMR sample contained 0.02 molar chromium (III) acetylacetonate (Cr(acac)₃). This compound was used as a relaxation agent to increase the efficiency of the experiments. NMR samples were prepared in Teflon tubes to eliminate the silicon signal in the Q region that occurs with glass tubes. In most cases, the acquisition time was 1 to 2 hours. Similar procedures for sample preparation were also used for ¹³C NMR.

Percent (%) Solids: 2-3 grams of the sample resin solution was placed into a preweighted aluminum dish. The sample was then heated in an oven at atmospheric pressure for 4 hours at 105°C. At that time the amount of weight loss was measured. The percent solids is the weight of the remaining portion of the sample relative to the original sample weight.

| | |
|---|---|
| Stability ratings: | Excellent: Clear; |
| | Very Good: Clear with slight solids |
| | Poor: Phase separation |

These ratings were done by eye.

Resin A: 28 grams of methyltrichlorosilane and 3.2 grams of dimethyldichlorosilane were hydrolyzed in the presence of 45.8 grams of toluene, 10.9 grams of water, and 11.5 grams of isopropanol. The reaction temperature was allowed to rise to 80°C and held there for three hours. The acid layer consisting of HCl, water and isopropanol was then removed and the product solution then azeotropically stripped to remove the remaining traces of water. The resin solids is 50%, the level of silanol is about 2.6% wt as determined by Si²⁹ NMR. The molar distribution of D and T units in Resin A are described in Table 1.

Resin B: 18.6 grams of methyltrichlorosilane and 2.8 grams of dimethyldichlorosilane were hydrolyzed in the presence of 31.0 grams of toluene, 4.2 grams of water, and 8.8 grams of isopropanol. Azeotropic distillation removes residual acid, water, isopropanol and toluene. The resin solids was adjusted to 50%, the level of silanol was about 4.6 % weight (wt) as determined by ²⁹Si NMR. The molar distribution of D and T units in Resin B are described in Table 1.

Resin C: 29 grams of methyltrimethoxysilane and 3.0 grams of dimethylcyclosiloxane were equilibrated and then hydrolyzed in the presence of 31.0 grams of toluene, 36.9 grams of water, and 0.05 grams of trifluoromethanesulfonic acid. After the reaction was completed the trifluoromethanesulfonic acid was neutralized with calcium carbonate (0.1 grams). The resin was then bodied in the presence of toluene to remove traces of water and residual alkoxy and silanol groups. The molar distribution of D and T units in Resin C are described in Table 1.

Resin D (Comparison) Sodium silicate and hexamethyldisiloxane were hydrolyzed and bodied to form a resin consisting of Mₓ and Q siloxy units where x = 1.27 to 1.32. The resin was used as a 70% solids solution in toluene. The silanol content was 2.5 %.wt. The molar distribution of M and Q units in Resin D are described in Table 1.

Resin A was dissolved in odorless mineral spirits at a solids of 50%wt for Examples 1 to 11. Examples 12, 13, 14 were prepared at solids of 25, 23 and 38% respectively. To the resin solution was added polydimethylsiloxane fluid, 350cs, with simple mixing; and then to that mixture was added tetraisopropyltitanate. The parts of each component added are provided in Table 2. Adding too little titanate results in gels or hazy solutions which over time become two phases. Solutions containing more titanate than polydimethylsiloxane fluid are favored for their stability.

Resin A preparations were made using the same mix sequence as for Examples 1 to 14. In this dataset, Table 3, the resin was dissolved in odorless mineral spirits at a solids of 71.5%wt. The parts of 350 cs polydimethylsiloxane and tetraisopropyltitanate used in the examples are listed in Table 3. In all cases the resulting solutions were hazy and without continuous mixing phase separate. Addition of more Component D, odorless mineral spirits, by measured aliquots allowed one to demonstrate the point at which a clear solution was achieved. It was also at that point the maximum water repellent solids were achieved. This data shows that one can maximize the effective water repellent solids by adjusting the level of titanate. This has the added benefit of introducing a more highly crosslinked resin matrix upon coating a substrate and curing the resin.

Table 4 lists the parts of the components used and results of Tests A and B (described below). Resin A was used at 50% solids in odorless mineral spirits. In this dataset, tetra-2-ethylhexyl titanate was used to compatibilize the resin and fluid components. The data shows that an excess of titanate to polydimethylsiloxane fluid ratio is favored to achieve acceptable solution stability.

Test A: The static water drop test involves placing a predetermined amount of water on to a flat horizontal piece of fabric. The test may be performed on treated or untreated fabric. A pipette is used to place a droplet of water on to the fabric. The water is placed on to the fabric from a close distance so that the droplet does not splatter on the surface. Sufficient water is dropped on to the fabric to create a droplet from 0.2 - 1.0 centimeter in diameter. Preferred is a droplet diameter of 0.5 centimeter. This amount could be reliably applied from a glass pipette, applying two drops of water from a height of 1 centimeter over the fabric. Immediately an assessment is made of the shape of the droplet and an approximation of the droplet's contact angle with the fabric surface. For example, a droplet with a high contact angle will be rounded and have a minimum area of contact between the water and the fabric surface. This indicates a very water repellent surface on the fabric. As the contact angle and the water repellency decreases, the shape of the droplet becomes flatter and the area of contact between he water and the fabric increases. A fabric surface with no water repellency will show the water soaking into the fabric, either partially or completely. It is also useful to reassess the character of the droplet after some period of time: from 5 minutes up to several hours. The data presented in Table 4 are readings of 5 minutes.

Test B: Approximately one gram of Heinz® Ketchup was placed on the fabric as a droplet, ie., a mound. This was let set at 23C for 17 hours. After this exposure period, the residue was washed off with water and gentle agitation. It was determined at this time whether any stain remained. If so, the spot was washed with gentle agitation using a 5gm Joy® dishwashing liquid in 100 gm of distilled water solution. After drying the area was reexamined for staining. This test was used for samples summarized in Table 4.

Examples 24, 25, 26, 32, 33, 34, 38 and 39 were repeated except that Resin A was used at 71.5% solids in mineral spirits. The higher solids solutions upon mixing with 350 cs polydimethylsiloxane and tetra-2-ethylhexyl titanate resulted in hazy, unstable water repellent solutions. Measured aliquots of additional odorless mineral spirits, Component D, were added back to these examples until solution clarity and stability were achieved. The parts for all components are in Table 5. One saw that as the titanate to polydimethylsiloxane fluid ratio increases, the effective water repellent solids level increases. This demonstrates that correct use of metal alkoxides to compatibilize the resin / fluid mixtures resulted in lower carrier solvent use.

40 parts of Resin A solution, at a solids level of 70%wt in odorless mineral spirits, was mixed with 30 parts each of 350 cs polydimethylsiloxane and tetra-2-ethylhexyl titanate. The ratio of resin solids to polydimethylsiloxane fluid was 0.93; the ratio of titanate to polydimethylsiloxane fluid was 1.0. This solution was diluted in odorless mineral spirits to 5-7% wt.

Resin D (40 parts) was formulated as a 70% solids solution in xylene with 30 parts of 350 cs polydimethylsiloxane fluid and 30 parts of tetra-2-ethylhexyl titanate. The ratio of resin solids to polydimethylsiloxane fluid is 0.93; the ratio of titanate to polydimethylsiloxane fluid is 1.0. The solution, though initially clear, over time yielded crystals which precipitated from solution.

The following tests also demonstrate the utility of the invention. If one skilled in the art dilutes the composition of Example 49 to 5-10% wt solids with toluene, and then applies the resulting solution to a substrate with overlapping spray, allowing the substrate to dry for 15 minutes, then spraying the substrate again and finally allowing it to dry at room temperature (23°C) for 24 hours, one would expect the following test results to be obtained. Coating weight of the treatment on the substrate would be approximately 1 % wt. The composition of Comparison Resin Water Repellent can be applied to the same substrate and cured in the same manner. Both treated substrates were then tested for comparison.

Test 1: A 4"x4" piece of 65/35 Polyester/Cotton Woven (7435) substrate was treated by the procedure noted above with Example 49, and another piece of the same fabric was treated with the Comparison Resin Water Repellent. Both were tested for Mildew Resistance by the AATCC Method 30. Results in Table 6 show that the Example 49 composition provides superior mildew resistance.

Test 2: The 12 Second Vertical Flammability Test in Compliance with FR 25.853 was used to evaluate 4" x 4" wool carpet samples, some which had been treated with Example 49 and some with the Comparison Resin Water Repellent. As shown in Table 6, while the Comparison Resin Water Repellent burned, the carper treated with Example 49 did not.

Test 3: 100% Cotton Woven (429W) 65/35 Polyester/Cotton Woven (7435) treated with both Example 49 and the Comparison Resin Water Repellent were evaluated for water repellency using the Water Repellency Spray Test per AATCC Method 22-1996. As shown in Table 6, both samples gave ratings of 100 which are excellent.

Test 4: 4"x 4" sections of wool carpet, when treated per the described method with either Example 49 or the Comparison Resin Water Repellent, were evaluated for stain release as shown in Table 6 using a selection of different stain media and found to release the staining agents with only a mild detergent and water solution. The stain media consisted of French®'s mustard being applied to the carpet which immediately formed a 1/8" bead. The mustard was then wiped away with a towel dampened with detergent solution and no mark or trace of mustard was evident. This test was repeated using coffee and also Diet Coke® with the stain media beading up and wiped off with no trace of stain present.

**TABLE 1: Description of Component (A) Resin**

| Resin | M | D | T* | Q | (R¹nSiO(([4-n)/2) Average n | Wt% OZ** | Weight Av Mw |
|---|---|---|---|---|---|---|---|
| A | 0 | 0.134 | 0.866 | 0 | 1.134 | 2.6 - 2.8 | 15,000 |
| B | 0 | 0.147 | 0.853 | 0 | 1.147 | 4.4 - 4.8 | 20,000 |
| C | 0 | 0.160 | 0.840 | 0 | 1.160 | | |
| D | 0.43 | 0 | 0 | 0.570 | 1.29 | 2.5 | 15,000 |

| | | | | | | | |
|---|---|---|---|---|---|---|---|
| * includes D(OZ) which is a T unit with one uncondensed silanol group ** includes both alkoxy and hydroxyl on silicon | | | | | | | |

| **TABLE 2** | | | | | |
|---|---|---|---|---|---|
| | | | | | |
| **Example** | **Component A (parts)** | **Component B (parts)** | **Component C (parts)** | **Stability** | **% Component A in Component D** |
| 1 | 100.0 | 50.0 | 83.3 | Good | 50.0 |
| 2 | 100.0 | 54.5 | 109.0 | Good | 50.0 |
| 3 | 100.0 | 70.4 | 103.7 | Good | 50.0 |
| 4 | 100.0 | 66.7 | 84.3 | Excellent | 50.0 |
| 5 | 100.0 | 80.0 | 120.0 | Good | 50.0 |
| 6 | 100.0 | 66.7 | 66.7 | Excellent | 50.0 |
| 7 | 100.0 | 80.0 | 120.0 | Good | 50.0 |
| 8 | 100.0 | 86.8 | 94.3 | Good | 50.0 |
| 9 | 100.0 | 83.6 | 83.6 | Good | 50.0 |
| 10 | 100.0 | 100.0 | 100.0 | Excellent | 50.0 |
| 11 | 100.0 | 120.0 | 80.0 | Excellent | 50.0 |
| 12 | 100.0 | 75.0 | 25.0 | Excellent | 25.0 |
| 13 | 100.0 | 200.7 | 33.5 | Poor | 23.0 |
| 14 | 100.0 | 121.5 | 20.3 | Poor | 38.0 |
| | | | | | |

| | | | | | |
|---|---|---|---|---|---|
| Notes: Comp. A: Resin A in a solution in mineral spirits (Component D). Comp. B: polydimethyl siloxane fluid, 350 cs. Comp. C: Tetraisopropyl Titanate Comp. D: odorless mineral spirits from Exxon Mobil Chemicals | | | | | |

| **TABLE 3** | | | | | | | | |
|---|---|---|---|---|---|---|---|---|
| | | | | | | | | |
| **Example** | **Component A (parts)** | **Component B (parts)** | **Component C (parts)** | **Stability (initial)** | **Initial % Component A in Component D** | **Post Added Component D** | **Stability (final)** | **% Component A in Component D (final)** |
| 15 | 100.0 | 50.0 | 66.5 | Poor | 71.5 | 8.3 | Good | 67.5 |
| 16 | 100.0 | 50.0 | 50.0 | Poor | 71.5 | 20.3 | Good | 62.4 |
| 17 | 100.0 | 50.0 | 33.5 | Poor | 71.5 | 45.0 | Good | 54.1 |
| | | | | | | | | |
| 18 | 100.0 | 79.9 | 99.9 | Poor | 71.5 | 14.0 | Good | 65.0 |
| 19 | 100.0 | 79.9 | 79.9 | Poor | 71.5 | 34.0 | Good | 57.5 |
| 20 | 100.0 | 79.9 | 59.9 | Poor | 71.5 | 57.9 | Good | 50.6 |
| | | | | | | | | |
| 21 | 100.0 | 125.0 | 145.8 | Poor | 71.5 | 31.6 | Good | 58.3 |
| 22 | 100.0 | 125.0 | 125.0 | Poor | 71.5 | 55.9 | Good | 51.1 |
| | | | | | | | | |

| | | | | | | | | |
|---|---|---|---|---|---|---|---|---|
| Notes: Comp. A: Resin A in a solution in mineral spirits (Component D). Comp. B: polydimethyl siloxane fluid, 350 cs. Comp. C: Tetraisopropyl Titanate Comp. D: is odorless mineral spirits from Exxon Mobil Chemicals | | | | | | | | |

| **TABLE 4** | | | | | | | | |
|---|---|---|---|---|---|---|---|---|
| **Example** | **Component A** | **Component B** | **Component C** | **%Component A in Component D** | **Stability** | **Static Water Drop** | **18 Hour, 25C Ketchup** | **Avg Treatment Weight** |
| 23 | 100 | 50.0 | 83.3 | 50 | Excellent | B | VVS | 1.23 |
| 24 | 100 | 50.0 | 66.7 | 50 | Excellent | A | VVS | 1.35 |
| 25 | 100 | 50.0 | 50.0 | 50 | Excellent | B | VS | 2.97 |
| 26 | 100 | 50.0 | 33.3 | 50 | Poor | B | VVS | 1.46 |
| 27 | 100 | 54.5 | 109.0 | 50 | Excellent | A | VVS | 1.54 |
| 28 | 100 | 66.7 | 84.3 | 50 | Excellent | A | VVS | 1.55 |
| 29 | 100 | 70.4 | 103.7 | 50 | Excellent | A | VVS | 1.57 |
| 30 | 100 | 66.7 | 66.7 | 50 | Excellent | | | |
| 31 | 100 | 80.0 | 120.0 | 50 | Excellent | | | |
| 32 | 100 | 80.0 | 100.0 | 50 | Excellent | B | VS | 0.64 |
| 33 | 100 | 80.0 | 80.0 | 50 | Fair | C | S | 1.31 |
| 34 | 100 | 80.0 | 60.0 | 50 | Poor | B | VS | 1.51 |
| 35 | 100 | 83.6 | 83.6 | 50 | Excellent | B | VS | 1.45 |
| 36 | 100 | 86.8 | 94.3 | 50 | Excellent | | | |
| 37 | 100 | 100.0 | 100.0 | 50 | Fair | | | |
| 38 | 100 | 120.0 | 140.0 | 50 | Excellent | B | VS | 3.39 |
| 39 | 100 | 120.0 | 120.0 | 50 | Fair | B | VS | 1.20 |
| 40 | 100 | 120.0 | 80.0 | 50 | Poor | B | S | 1.35 |
| Untreated Fabric | | | | | | D | M | -- |

| | | | | | | | | |
|---|---|---|---|---|---|---|---|---|
| Notes:. Comp. A: Resin A in a solution of mineral spirits A = Very high contact angle, water bead moves easily over surface Comp. B: polydimethyl siloxane fluid, 350 cs. B = High contact angle, bead moves over the surface Comp. C: tetra-2-ethylhexyl titanate C = Bead flattens out on the surface Comp. D odorless mineral spirits from Exxon Mobil Chemicals D = Water soaks VVS = Very, very slight stain, VS = Very slight stain, S = Stains, M = Stains heavily | | | | | | | | |

| **TABLE 5** | | | | | | | | |
|---|---|---|---|---|---|---|---|---|
| | | | | | | | | |
| **Exampl e** | **Component A** | **Component B** | **Component C** | **Stability (initial)** | **Initial % Component A in Component D** | **Post Added Component D** | **Stability (final)** | **% Component A in Component D (final)** |
| 41 | 100 | 50.0 | 66.5 | Poor | 71.5 | 17.0 | Good | 63.8 |
| 42 | 100 | 50.0 | 50.0 | Poor | 71.5 | 54.6 | Good | 51.4 |
| 43 | 100 | 50.0 | 33.5 | Poor | 71.5 | 109.2 | Good | 40.1 |
| | | | | | | | | |
| 44 | 100 | 76.9 | 96.2 | Poor | 71.5 | 21.2 | Good | 62.1 |
| 45 | 100 | 76.9 | 76.9 | Poor | 71.5 | 65.5 | Good | 48.7 |
| 46 | 100 | 76.9 | 57.7 | Poor | 71.5 | 115.5 | Good | 39.2 |
| | | | | | | | | |
| 47 | 100 | 125.0 | 146.3 | Poor | 71.5 | 113.9 | Good | 39.4 |
| 48 | 100 | 125.0 | 125.0 | Poor | 71.5 | 101.9 | Good | 41.4 |

| | | | | | | | | |
|---|---|---|---|---|---|---|---|---|
| Notes: Comp. A: Resin A in a solution in mineral spirits (Component D). Comp. B: polydimethyl siloxane fluid, 350 cs. Comp. C: Tetraisopropyl Titanate Comp. D: odorless mineral spirits from Exxon Mobil Chemicals | | | | | | | | |

**Table 6**

| | A. Mildew Resistance | B. Flame Retardancy | C Water Repellency | D. Stain Release |
|---|---|---|---|---|
| Example 49* | Pass | Pass | 100 | Pass |
| Comparison Resin Water Repellent* | Fail | Fail | 100 | Pass |

| | | | | |
|---|---|---|---|---|
| * Samples of Ex. 49 and the Comparison were also applied to a 70 Denier polyamide 66 woven fabric. Ex. 49 was noted to impart a better feel, of hand, to the fabric. The Comparison resulted in a fabric feel that was more stiff and less supple. | | | | |

## Claims

1. A composition comprising
(A) 100 parts by weight of at least one organosiloxane copolymer having a general formula (I) R¹ₙSiO_{(4-n)/2}, where each R¹ is independently chosen from a hydrogen atom or a monovalent hydrocarbon group comprising 1 to 10 carbon atoms, provided greater than 80 mole percent of R¹ are methyl groups, n is a value from 0.8 to 1.5, greater than 50 mole percent of the copolymer comprises R¹ SiO_{3/2} units, and having a hydroxyl content from 0.2 to 5 weight percent;
(B) 10 to 120 parts by weight of at least one polyorganosiloxane having a general formula (II) R²R³₂SiO(R³₂SiO_{2/2})ₐ(R³SiO_{3/2})_{b}SiR³₂R² where each R² is an independently chosen hydrogen atom, monovalent hydrocarbon group comprising 1 to 10 carbon atoms, hydroxy group, or alkoxy group, each R³ is independently chosen from a hydrogen atom or a monovalent hydrocarbon group comprising 1 to 10 carbon atoms, a is an integer from 2 to 2000, and b is chosen such that b/(a+b) is from 0 to 0.05; and
(C) 10 to 150 parts by weight of at least one metal alkoxide.

2. The composition of claim 1 where each R¹ is independently chosen from alkyl groups comprising 1 to about 8 carbon atoms and n is a value from 1 to 1.5.

3. The composition of claim 1 where each R¹ is methyl, n is a value from 1 to 1.3, greater than 70 mole percent of the organosiloxane copolymer comprises R¹ SiO_{3/2} units, and the organosiloxane copolymer comprises essentially no SiO_{4/2} units.

4. The composition of any of claims 1 to 3 where each R² of component (B) is an independently chosen alkyl group comprising 1 to 8 carbon atoms.

5. The composition of any of claims 1 to 3 where each R² is methyl.

6. The composition of any of claims 1 to 5 where the metal alkoxide has the formula M(OR⁴)₄, where M is titanium or zirconium and each R⁴ is independently chosen from alkyl groups comprising 1 to 12 carbon atoms or hydroxylated alkyl groups comprising 1 to 12 carbon atoms and containing less than 4 hydroxyl groups.

7. The composition of any of claims 1 to 5 where the metal alkoxide has the formula M(OR⁴)₄, where M is titanium and each R⁴ is an alkyl group comprising 6 to 12 carbon atoms.

8. The composition of any of claims 1 to 7 comprising 50 to 140 parts of component (C) per 100 parts of component (A).

9. The composition of any of claims 1 to 8 where the amount of Component C in the composition is equal to or greater than the amount of Component B.

10. The composition of any of claims 1 to 9 further comprising (D) at least one carrier chosen from water, organic solvents, and silicone compounds.

11. The composition of any of claims 1 to 9 further comprising (D) 10 to 400 parts by weight per 100 parts by weight of component (A) of at least one carrier chosen from water, organic solvents, and silicone compounds

12. The composition of any of claims 1 to 10 comprising 40 to 200 parts by weight of component (D) per 100 parts by weight of component (A).

13. A method of preparing a composition of any of claims 1 to 12 comprising mixing the components described therein.

14. A method for treating substrates comprising applying the composition of any of claims 1 to 12 to a substrate.

15. The method for treating substrates of claim 14 where the substrate is chosen from leather, wood, textile fabrics, fibers, and masonry.

## Patentansprüche

1. Eine Zusammensetzung, umfassend
(A) 100 Gewichtsteile wenigstens eines Organosiloxancopolymers mit der allgemeinen Formel (I) R¹ₙSiO_{(4-n)/2}. worin jedes R¹ unabhängig voneinander aus einem Wasserstoffatom oder einer einbindigen Kohlenwasserstoffgruppe mit 1 bis 10 Kohlenstoffatomen ausgewählt ist, unter der Voraussetzung, dass mehr als 80 Molprozent von R¹ Methylgruppen sind, n ein Wert von 0,8 bis 1,5 ist, mehr als 50 Molprozent des Copolymers R¹SiO_{3/2}-Einheiten umfassen, und mit einem Hydroxylgehalt von 0,2 bis 5 Gewichtsprozent;
(B) 10 bis 120 Gewichtsteile wenigstens eines Polyorganosiloxans mit der allgemeinen Formel (II) R²R³₂SiO(R³₂SiO_{2/2})ₐ(R³SiO_{3/2})_{b}SiR³₂R², worin jedes R² unabhängig voneinander aus einem Wasserstoffatom, einer einbindigen Kohlenwasserstoffgruppe mit 1 bis 10 Kohlenstoffatomen, einer Hydroxygruppe oder Alkoxygruppe ausgewählt ist, jedes R³ unabhängig voneinander aus einem Wasserstoffatom oder einer einbindigen Kohlenwasserstoffgruppe mit 1 bis 10 Kohlenstoffatomen ausgewählt ist, a eine ganze Zahl von 2 bis 2000 ist und b derart gewählt ist, dass b/(a + b) von 0 bis 0,05 ist; und
(C) 10 bis 150 Gewichtsteile wenigstens eines Metallalkoxids.

2. Die Zusammensetzung gemäß Anspruch 1, wobei jedes R¹ unabhängig voneinander aus Alkylgruppen mit 1 bis ungefähr 8 Kohlenstoffatome ausgewählt ist und n ein Wert von 1 bis 1,5 ist.

3. Die Zusammensetzung gemäß Anspruch 1, wobei jedes R¹ Methyl ist, n ein Wert von 1 bis 1,3 ist, mehr als 70 Molprozent des Organosiloxancopolymers R¹SiO_{3/2}-Einheiten umfassen und das Organosiloxancopolymer im Wesentlichen keine SiO_{4/2}-Einheiten umfasst.

4. Die Zusammensetzung gemäß einem der Ansprüche 1 bis 3, wobei jedes R² der Komponente (B) eine unabhängig ausgewählte Alkylgruppe mit 1 bis 8 Kohlenstoffatomen ist.

5. Die Zusammensetzung gemäß einem der Ansprüche 1 bis 3, wobei jedes R² Methyl ist.

6. Die Zusammensetzung gemäß einem der Ansprüche 1 bis 5, wobei das Metallalkoxid die Formel M(OR⁴)₄ aufweist, worin M Titan oder Zirkonium ist und jedes R⁴ unabhängig voneinander aus Alkylgruppen mit 1 bis 12 Kohlenstoffatomen oder hydroxylierten Alkylgruppen mit 1 bis 12 Kohlenstoffatomen ausgewählt ist, und weniger als 4 Hydroxylgruppen enthält.

7. Die Zusammensetzung gemäß einem der Ansprüche 1 bis 5, wobei das Metallalkoxid die Formel M(OR⁴)₄ aufweist, worin M Titan ist und jedes R⁴ eine Alkylgruppe mit 6 bis 12 Kohlenstoffatomen ist.

8. Die Zusammensetzung gemäß einem der Ansprüche 1 bis 7, die 50 bis 140 Teile der Komponente (C) pro 100 Teile der Komponente (A) umfasst.

9. Die Zusammensetzung gemäß einem der Ansprüche 1 bis 8, wobei die Menge der Komponente C in der Zusammensetzung gleich oder größer der Menge der Komponente B ist.

10. Die Zusammensetzung gemäß einem der Ansprüche 1 bis 9, die zusätzlich wenigstens einen Träger (D), ausgewählt aus Wasser, organischen Lösungsmitteln und Silikonverbindungen, umfasst.

11. Die Zusammensetzung gemäß einem der Ansprüche 1 bis 9, die zusätzlich (D) 10 bis 400 Gewichtsteile wenigstens eines Trägers pro 100 Gewichtsteile der Komponente (A) umfasst, der aus Wasser, organischen Lösungsmitteln und Silikonverbindungen ausgewählt ist.

12. Die Zusammensetzung gemäß einem der Ansprüche 1 bis 10, umfassend 40 bis 200 Gewichtsteile der Komponente (D) pro 100 Gewichtsteile der Komponente (A).

13. Ein Verfahren zur Herstellung einer Zusammensetzung gemäß einem der Ansprüche 1 bis 12, welches das Mischen der darin beschriebenen Komponenten umfasst.

14. Ein Verfahren zur Behandlung von Substraten, umfassend das Auftragen der Zusammensetzung gemäß einem der Ansprüche 1 bis 12 auf ein Substrat.

15. Das Verfahren zur Behandlung von Substraten gemäß Anspruch 14, wobei das Substrat aus Leder, Holz, Textilwaren, Fasern und Mauerwerk ausgewählt ist.

## Revendications

1. Composition comprenant
(A) 100 parties en poids d'au moins un copolymère d'organosiloxane ayant une formule générale (I) R¹ₙSiO_{(4-n) /2}, où chaque R¹ est indépendamment choisi parmi un atome d'hydrogène ou un groupe hydrocarbure monovalent comprenant 1 à 10 atomes de carbone, à condition que plus de 80 pour cent en mole de R¹ soient constitués de groupes méthyle, n est une valeur allant de 0,8 à 1,5, plus de 50 pour cent en mole du copolymère comprend des motifs R¹SiO_{3/2} et ayant une teneur en hydroxyle de 0,2 à 5 pour cent en poids ;
(B) 10 à 120 parties en poids d'au moins un poly(organosiloxane) ayant une formule générale (II) R²R³₂SiO (R³₂SiO_{2/2}) ₐ (R³SiO_{3/2}) _{b}SiR³₂R² où chaque R² est indépendamment choisi parmi un atome d'hydrogène, un groupe hydrocarbure monovalent comprenant 1 à 10 atomes de carbone, un groupe hydroxy ou un groupe alcoxy, chaque R³ est indépendamment choisi parmi un atome d'hydrogène ou un groupe hydrocarbure monovalent comprenant 1 à 10 atomes de carbone, a est un entier de 2 à 2 000 et b est choisi de sorte que b/(a+b) soit égal à 0 à 0,05 ; et
(C) 10 à 150 parties en poids d'au moins un alcoxyde de métal.

2. Composition selon la revendication 1, dans laquelle chaque R¹ est indépendamment choisi parmi des groupes alkyle comprenant 1 à environ 8 atomes de carbone et n est une valeur allant de 1 à 1,5.

3. Composition selon la revendication 1, dans laquelle chaque R¹ est un groupe méthyle, n est une valeur allant de 1 à 1,3, plus de 70 pour cent en mole du copolymère d'organosiloxane comprend des motifs R¹SiO_{3/2} et le copolymère d'organosiloxane ne comprend essentiellement aucun motif SiO_{4/2}.

4. Composition selon l'une quelconque des revendications 1 à 3, dans laquelle chaque R² du composant (B) est un groupe alkyle comprenant 1 à 8 atomes de carbone choisi indépendamment.

5. Composition selon l'une quelconque des revendications 1 à 3, dans laquelle R² est un groupe méthyle.

6. Composition selon l'une quelconque des revendications 1 à 5, dans laquelle l'alcoxyde de métal a la formule M(OR⁴)₄, où M est du titane ou du zirconium et chaque R⁴ est indépendamment choisi parmi des groupes alkyle comprenant 1 à 12 atomes de carbone ou des groupes alkyle hydroxylés comprenant 1 à 12 atomes de carbone et contenant moins de 4 groupes hydroxyle.

7. Composition selon l'une quelconque des revendications 1 à 5, dans laquelle l'alcoxyde de métal a la formule M(OR⁴)₄, où M est du titane et chaque R⁴ est un groupe alkyle comprenant 6 à 12 atomes de carbone.

8. Composition selon l'une quelconque des revendications 1 à 7, comprenant 50 à 140 parties du composant (C) pour 100 parties du composant (A).

9. Composition selon l'une quelconque des revendications 1 à 8, dans laquelle la quantité du composant C dans la composition est supérieure ou égale à la quantité du composant B.

10. Composition selon l'une quelconque des revendications 1 à 9, comprenant en outre (D) au moins un véhicule choisi parmi l'eau, les solvants organiques et les composés silicone.

11. Composition selon l'une quelconque des revendications 1 à 9, comprenant en outre (D) 10 à 400 parties en poids pour 100 parties en poids du composant (A) d'au moins un véhicule choisi parmi l'eau, les solvants organiques et les composés silicone.

12. Composition selon l'une quelconque des revendications 1 à 10, comprenant 40 à 200 parties en poids du composant (D) pour 100 parties en poids du composant (A).

13. Procédé de préparation d'une composition selon l'une quelconque des revendications 1 à 12, comprenant le mélange des composants décrits ici.

14. Procédé de traitement de substrats, comprenant l'application de la composition selon l'une quelconque des revendications 1 à 12 sur un substrat.

15. Procédé de traitement de substrats selon la revendication 14, dans lequel le substrat est choisi parmi le cuir, le bois, les étoffes textiles, les fibres et la maçonnerie.
